# EUROPÄISCHE PATENTANMELDUNG

(11) **EP 0 816 878 A2**
(43) Veröffentlichungstag der Anmeldung: **07.01.1998**
(21) Anmeldenummer: 97108995.8
(22) Anmeldetag: 04.06.1997
(51) Int. Cl.: G02B 6/12

(54) **Verfahren zur Herstellung von Spiegeln für Wellenreiter in integriert-optischen Bauelementen**

(30) Priorität: 19.06.1996 DE 19624366
(71) Anmelder: ROBERT BOSCH GMBH, 70442 Stuttgart (DE)
(72) Erfinder: Mueller Fiedler, Roland Dr., 71229 Leonberg (DE); Hauer, Heiner, 70734 Fellbach (DE); Kuke, Albrecht Dr.rer.nat., 71549 Auenwald (DE)

(57) **Zusammenfassung**

Es wird ein Verfahren zur Erzeugung eines Wellenleiters in einer auf einem Substrat befindlichen Vertiefung und einem Spiegel zur Strahlumlenkung vorgeschlagen. Da der Spiegel aus einem Metall mit hohem Schmelzpunkt besteht, kann die Spiegelschicht schon vor Fertigstellung der Wellenleiterstruktur aufgebracht werden. Das Tempern der Wellenleiterstruktur beeinträchtigt die optischen Eigenschaften des Spiegels nicht. Hierdurch ergeben sich deutliche Vorteile bei der rationellen Produktion von integriert-optischen Bauteilen. Insbesondere ist dieses Verfahren geeignet, vertikal emittierende Elemente, wie auf ihrer Oberfläche emittierende Halbleiterlaser (vertical cavity surface emitting laser diode, VCSEL), an einen parallel zur Substratoberfläche geführten Lichtwellenleiter anzukoppeln.

## Beschreibung

### Stand der Technik

Die Erfindung geht aus von einem Verfahren zur Erzeugung eines optischen Wellenleiters mit einer Reflexionseinrichtung nach der Gattung des unabhängigen Anspruchs.

Aus den Tagungsberichten zur 20. Europäischen Konferenz über optische Kommunikation, 25. - 29.9.1994 in Florenz, Seite 205 ist schon ein Verfahren zur Erzeugung eines optischen Wellenleiters mit einer Reflexionseinrichtung bekannt. In einem Silizium-Substrat wird eine Vertiefung hergestellt, welche in etwa die Form des herzustellenden Wellenleiters besitzt. Diese Vertiefung wird in einem darauffolgenden Schritt mit dem Wellenleitermaterial, beispielsweise Siliziumoxynitrid, aufgefüllt. Während der Abscheidung wird Wasser in das Wellenleitermaterial eingebaut, welches durch einen der Abscheidung folgenden Temperschritt entfernt wird. An einem Ende der Wellenleiterstruktur wird dann das Wellenleitermaterial wieder aus der Vertiefung ausgelöst. Auf der dem Wellenleiterende gegenüberliegenden Wand der Vertiefung wird dann eine Spiegelschicht aus Gold aufgebracht. Gegebenenfalls muß die Wandfläche vor dem Aufbringen der Spiegelschicht geglättet werden oder durch einen anisotropen Ätzprozeß relativ zur Siliziumsubstratoberfläche angeschrägt werden. Somit kann Licht von einer Ausbreitungsrichtung in etwa senkrecht zur Substratoberfläche in eine Ausbreitungsrichtung, in etwa parallel zur Substratoberfläche, umgelenkt werden. Dies ist insbesondere notwendig, um beispielsweise eine vertikal emittierende Laserdiode mit einer mikrostrukturtechnisch hergestellten Wellenleiterstruktur zu koppeln oder auch um eine optische Verbindung zwischen einem vorfabrizierten Sensorelement und einer solchen Wellenleiterstruktur herzustellen.

### Vorteile der Erfindung

Das erfindungsgemäße Verfahren mit den kennzeichnenden Merkmalen der unabhängigen Ansprüche hat demgegenüber den Vorteil, daß ein aufwendiger Prozeßschritt entfällt, da das bereits in die Vertiefung eingebrachte Wellenleitermaterial nicht wieder partiell entfernt werden muß. Insbesondere ergibt sich somit eine deutliche Senkung der Produktionskosten. Als weiterer Vorteil ist anzusehen, daß ein mit Hilfe dieses Verfahrens gefertigtes Bauteil auch für spätere Fertigungsschritte und im Einsatz eine geringere Wärmeempfindlichkeit aufweist. Hiermit ergibt sich eine größere Flexibilität, beispielsweise beim Einsatz von Wafer-Bonding-Verfahren in der Fertigung. Schließlich ist es als weiterer Vorteil anzusehen, daß die Spiegelschicht vom Wellenleitermaterial bedeckt wird, welches gleichzeitig den Spiegel vor schädlichen Einflüssen während der Produktion und später vor Umwelteinflüssen schützt.

Durch die in den abhängigen Ansprüchen aufgeführten Maßnahmen sind vorteilhafte Weiterbildungen und Verbesserungen des im unabhängigen Anspruch angegebenen Verfahrens möglich.

Die Wärmebehandlung des Wellenleiters nach dem Einbringen des Wellenleitermaterials in die Vertiefung ermöglicht es, Wellenleiter mit geringeren Verlusten zu produzieren.

Durch die Verwendung von Silizium als Substrat und der Herstellung der Vertiefung durch einen anisotropen naßchemischen Ätzprozeß ist es möglich, eine Vertiefung im Siliziumsubstrat herzustellen, deren Seitenwände extrem glatt sind und mit der Oberfläche einen Winkel von 54,7° bilden. Diese Wände können ohne weitere Bearbeitung als Träger für das Spiegelmaterial dienen.

Durch die Herstellung einer dachförmigen Vertiefung im Substrat, welche bereits die für den Wellenleiter vorgesehene Form aufweist, das Aufbringen der Spiegelschicht, und schließlich das Einbringen des Wellenleitermaterials ergibt sich ein besonders rationelles und kostengünstiges Verfahren.

Durch die Herstellung einer ersten dachförmigen Vertiefung, an deren mindestens eine Seitenwand eine Spiegelschicht aufgebracht wird, und die darauffolgende Herstellung der Vertiefungen für die Wellenleiter, ergibt sich ein sehr flexibles Verfahren, welches erlaubt, komplexe Strukturen herzustellen. Beispielsweise können auf diese Art mehrere Wellenleiterstrukturen, welche verschieden tief in das Substrat eingebettet sind, hergestellt werden.

### Zeichnung

Ausführungsbeispiele der Erfindung sind in der Zeichnung dargestellt und in der nachfolgenden Beschreibung näher erläutert. Es zeigen
Figuren 1 a-c die wichtigsten Zwischenschritte zur Herstellung eines Spiegels für Wellenleiter in integriertoptischen Bauelementen,
Figur 2 ein Anwendungsbeispiel für einen solchen Spiegel,
Figuren 3 a-e ein abgewandeltes Verfahren zur Herstellung eines Spiegels für Wellenleiter in integriert-optischen Bauelementen, welches auch zur Herstellung von komplexeren Bauteilen geeignet ist,
Figur 4 ein Anwendungsbeispiel für einen Spiegel, welcher nach dem in Figur 3 a-e gezeigten Verfahren hergestellt ist.

### Beschreibung

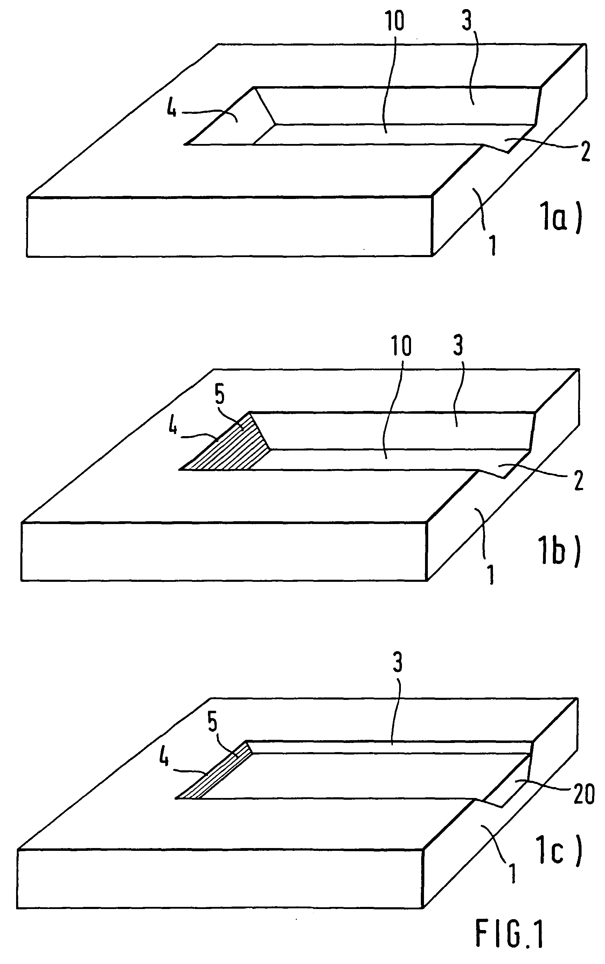

Figuren 1 a-c zeigen ein Siliziumsubstrat 1 in drei Stufen des Fertigungsprozesses.

Im ersten Fertigungsschritt wird in dem Siliziumsubstrat 1 eine später als Wellenleitergraben dienende Vertiefung erzeugt. Figur 1 a zeigt das Siliziumsubstrat 1 nach diesem Fertigungsschritt. Das Siliziumsubstrat 1 weist eine längliche dachförmige Vertiefung 10 auf mit einem in etwa parallel zur Oberfläche verlaufenden Boden 2, zwei Längswänden 3, von welchen in Figur 1 a nur eine sichtbar ist, und einer Stirnwand 4. Die Stirnwand 4 und die Längswände 3 der dachförmigen Vertiefung 10 stehen nicht genau senkrecht zum Boden 2 der dachförmigen Vertiefung 10, sondern stehen in einem Winkel 54,7° zum Boden 2. Die in Figur 1 a gezeigte dachförmige Vertiefung 10 im Siliziumsubstrat 1 kann durch naßchemisches anisotropes Ätzen besonders einfach hergestellt werden. Hierzu wird ein Siliziumsubstrat mit [100]-Orientierung gewählt. Es wird mit einer Maske versehen, welche die nicht zu ätzenden Flächen schützt, und in Kaliumhydroxid bei einer leicht erhöhten Temperatur von beispielsweise 70 °C geätzt. Es entsteht dann eine dachförmige Vertiefung, deren Begrenzungsflächen 3 und 4 jeweils [111]-Flächen mit einem Neigungswinkel von 54,7° relativ zur Substratoberfläche sind. Bei längerer Ätzung verschwindet der Boden 2 der dachförmigen Vertiefung 10, so daß die dachförmige Vertiefung 10 einen V-förmigen Querschnitt aufweist. Ätzverfahren, welche für andere Materialien oder andere kristallographische Orientierungen geeignet sind, finden sich in der einschlägigen Literatur und sind dem Fachmann bekannt.

In Figur 1 b zeigt dasselbe Siliziumsubstrat 1 mit derselben länglichen dachförmigen Vertiefung 10 im Siliziumsubstrat 1 nach einem weiteren Prozessschritt. Hierbei wird auf die Stirnfläche 4 der dachförmigen Vertiefung 10 eine aus Wolfram bestehende spiegelnde Metallschicht 5 aufgebracht.

Figur 1 c zeigt das Bauteil nach einem weiteren Schritt. Die längliche Vertiefung 10 mit den Seitenwänden 3, dem Boden 2 und der mit einer Metallschicht 5 beschichteten Stirnwand 4 wurde mit einem Wellenleitermaterial 20, in diesem Fall Siliziumoxynitrid, aufgefüllt, so daß sich eine Wellenleiterstruktur ergibt. Um diese Wellenleiterstruktur zu erhalten, sind beim Auffüllen passende Vorkehrungen zum Erhalt eines Brechungsindexgradienten im Wellenleitermaterial 20 zu treffen, welche dem Fachmann bekannt sind.

Um die Lichtabsorption im Wellenleitermaterial 20 so gering wie möglich zu halten, muß das gesamte Bauteil nach dem Einbringen des Wellenleitermaterials 20 in die längliche dachförmige Vertiefung 10 bei 1100°C getempert werden, wodurch in das Wellenleitermaterial 20 eingebautes Wasser ausgetrieben wird. Die Temperatur für den Temperschritt kann, je nach verwendetem Wellenleitermaterial 20, auch von den o.g. 1100°C abweichen.

Anstelle von Wolfram können auch andere Metalle mit einem hohen Schmelzpunkt für die Herstellung der Metallschicht 5 verwendet werden, wie beispielsweise Platin oder Rhodium. Gold, welches häufig als Material für optische Spiegel verwendet wird, ist jedoch nicht einsetzbar. Der Schmelzpunkt von Gold liegt bei 1063 °C. Schon bei deutlich unterhalb des Schmelzpunkts liegenden Temperaturen verändert Gold durch Rekristallisation seine Kornstruktur, was zu einer diffusen Reflexion des Lichts führt.

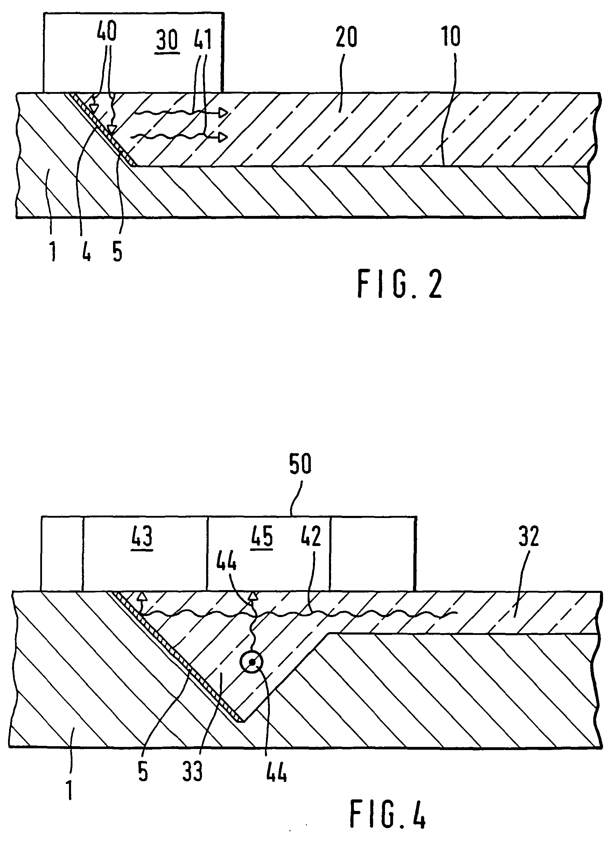

Eine Anwendung des Bauteils, welches nach dem oben geschilderten Verfahren erzeugt wurde, ist in dem Querschnitt in Figur 2 zu sehen. Im Substrat 1 befindet sich eine längliche dachförmige Vertiefung 10, entlang deren Längsachse der in Figur 2 dargestellte Schnitt vorgenommen wurde. Auf der Stirnfläche 4 der länglichen dachförmigen Vertiefung 10 ist die aus der Beschreibung zu Figur 1 bekannte Metallschicht 5 aufgebracht. In der Vertiefung 10 befindet sich das Wellenleitermaterial 20. Im hier gewählten Ausführungsbeispiel jedoch wird die längliche dachförmige Vertiefung 10 vollständig vom Wellenleitermaterial 20 aufgefüllt, so daß die Oberfläche des Wellenleiters und die Substratoberfläche eine glatte Fläche bilden. Auf dieser Oberfläche, in etwa über der Stirnfläche 4 mit der Metallschicht 5 ist ein vertikal emittierender Halbleiterlaser 30 angebracht. Vom vertikal emittierenden Halbleiterlaser 30 ausgestrahltes Licht 40 pflanzt sich in etwa senkrecht zur Substratoberfläche fort, bis es auf die Metallschicht 5 trifft. Das von der Metallschicht 5 reflektierte Licht 41 ist in etwa parallel zur Substratoberfläche gerichtet. Abweichungen von der parallelen Richtung ergeben sich beispielsweise durch einen von 45 ° abweichenden Winkel zwischen Stirnfläche 4 der länglichen dachförmigen Vertiefung 10 und der Substratoberfläche. Durch die Führung des reflektierten Lichts 41 durch den Wellenleiter ist diese Abweichung jedoch unerheblich.

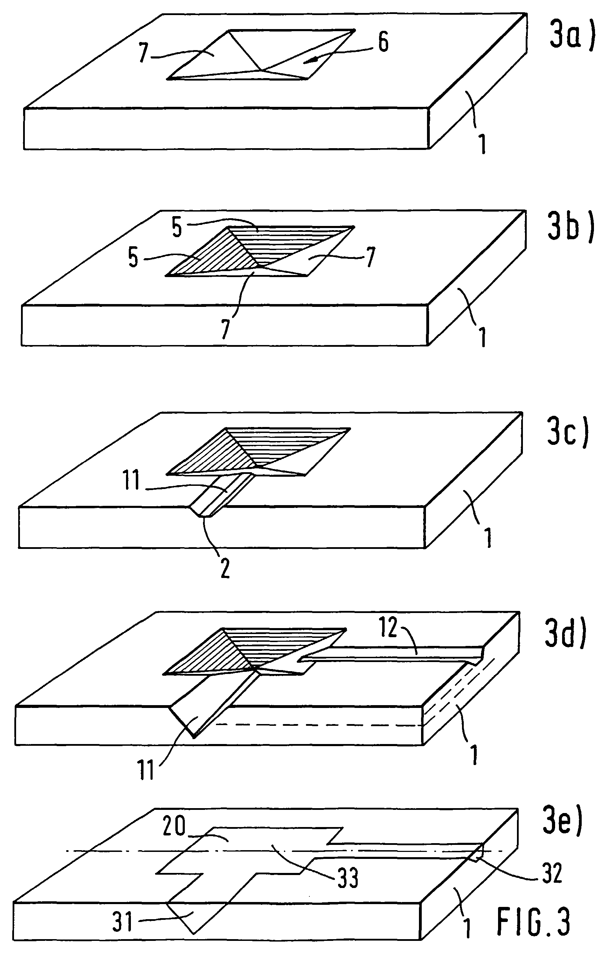

Ein weiteres Ausführungsbeispiel ist in den Figuren 3 a-e gezeigt.

In einem Siliziumsubstrat 1 wurde mittels der schon in der Beschreibung zu Figur 1 erläuterten Ätztechnik eine pyramidenförmige Vertiefung 6 mit vier Pyramidenflächen 7 erzeugt, wie in Figur 3 a zu sehen ist.

In Figur 3 b ist das Substrat 1 mit der pyramidenförmigen Vertiefung 6 zu sehen, wobei auf zwei der vier Pyramidenflächen 7 eine Metallschicht 5 aufgebracht wurde. Diese Metallschicht 5 besteht, wie im vorhergehenden Beispiel, aus einem Metall mit hohem Schmelzpunkt, beispielsweise Platin.

Im Gegensatz zum in den Figuren 1 a-c gezeigten Ausführungsbeispiel werden im hier gezeigten Ausführungsbeispiel die Vertiefungen für die Wellenleiterstrukturen erst nach Aufbringen der Metallschicht 5 fertiggestellt. Im hier gezeigten Ausführungsbeispiel erfolgt diese Fertigstellung in einem Zweischrittprozeß. Im ersten dieser beiden Schritte wird eine erste längliche dachförmige Vertiefung 11 hergestellt. Dieser Ätzprozeß wird jedoch nach einiger Zeit unterbrochen, so daß die erste längliche dachförmige Vertiefung 11 noch einen zur Substratoberfläche parallelen Boden 2 aufweist und beispielsweise 200 Mikrometer tief ist. Figur 3 c zeigt das Siliziumsubstrat zu diesem Zeitpunkt.

Nach einer Änderung an den die Substratoberfläche bedeckenden Schutzschichten oder Masken, welche hier nicht im Detail gezeigt ist, wird der Ätzprozeß fortgesetzt. Hierbei wird die erste längliche dachförmige Vertiefung 11 weitergeätzt, bis der Boden 2 verschwunden ist und die erste längliche dachförmige Vertiefung 11 einen dreieckigen Querschnitt aufweist. Gleichzeitig entsteht eine zweite längliche dachförmige Vertiefung 12, welche bei Erreichen eines dreieckigen Querschnitts für die erste längliche dachförmige Vertiefung 11 noch einen trapezförmigen Querschnitt aufweist. Beispielsweise seien die erste längliche dachförmige Vertiefung 11 1 mm tief und die zweite längliche dachförmige Vertiefung 12 400 Mikrometer. Die so erhaltene Struktur ist in Figur 3 d dargestellt.

In einem darauffolgenden Prozeßschritt, welcher zu der Struktur in Figur 3 e führt, wird die in Figur 3 d gezeigte Struktur mit dem Wellenleitermaterial 20 aufgefüllt. Bei dem Wellenleitermaterial handelt es sich wie im vorhergehenden Beispiel um Siliziumoxynitrid. Wiederum schließt sich an das Auffüllen der Vertiefungen mit dem Wellenleitermaterial 20 ein Temperschritt an, um die Verluste der Wellenleiterstrukturen so gering wie möglich zu halten. Das so erhaltene Bauteil umfaßt einen ersten Wellenleiter 31, einen zweiten Wellenleiter 32, welche beide in eine Spiegelkammer 33 münden, wobei sämtliche Wellenleiterstrukturen im Siliziumsubstrat 1 versenkt sind.

Eine Anwendung dieses Bauteils ist in Figur 4 dargestellt. Hierbei ist das in Figur 3 e dargestellte Bauteil entlang der gestrichelten Linie, welche eine Längsachse des zweiten Wellenleiters 32 darstellt, aufgeschnitten. Zu sehen ist das Siliziumsubstrat 1, welches die als Spiegelkammer 33 ausgebildete pyramidenförmige Vertiefung aufweist. Die linke Pyramidenfläche ist mit einer Metallschicht 5 versehen, die zweite mit einer Metallschicht 5 versehene Pyramidenfläche liegt nicht in der Schnittfläche und ist deshalb in Figur 4 unsichtbar. Von der Spiegelkammer 33 nach rechts führt der zweite Wellenleiter 32, der erste Wellenleiter 31 führt von der Spiegelkammer 33 aus der Schnittfläche heraus und ist ebenfalls nicht sichtbar. Auf dem Substrat 1 ist ein optischer Detektor 50 angebracht, welcher hier als positionssensitiver Detektor ausgebildet ist.

Das aus dem zweiten Wellenleiter 32 kommende Licht 42 wird in einen ersten Bereich 43 des positionssensitiven Detektors 50 reflektiert, das aus dem ersten Wellenleiter 31 kommende Licht 44 wird in einen zweiten Bereich 45 des positionssensitiven Detektors 50 reflektiert. Da die Lichtstrahlen 42 und 44 sich in unterschiedlichem Abstand von der Substratoberfläche fortpflanzen, und sich ihre Wege auch in der Spiegelkammer 33 nicht überschneiden, wird der Effekt des optischen Übersprechens verringert. Durch die Herstellung einer Spiegelkammer mit Metallspiegelflächen aus Metall mit hohem Schmelzpunkt und darauffolgender Fertigstellung der länglichen Vertiefungen für die Wellenleiter, ergibt sich eine größere Flexibilität in der Ausgestaltung der Wellenleiter und ihrer Anordnung.

Die hier gezeigten Anwendungen von Wellenleitern mit Reflexionseinrichtungen, welche nach dem Verfahren erzeugt wurden, liegen in der Umleitung von Licht, welches sich parallel zur Substratoberfläche fortpflanzt, in Licht, welches sich senkrecht zur Substratoberfläche ausbreitet. Sie sind jedoch nicht hierauf beschränkt.

Ebenso ist es vorgesehen, das Verfahren zur Herstellung von etwa rechtwinkligen Strahlumlenkungen in der Oberfläche zu verwenden. Hierbei steht die reflektierende Fläche, auf welcher die Metallschicht 5 aufgebracht wird, etwa senkrecht zur Substratoberfläche. Auch bei dieser Anwendung kommen die oben geschilderten Vorteile der Erfindung voll zum Tragen. Zu diesem Zweck kann eine anisotrope naßchemische Ätztechnik mit anderer Orientierung des Substrats gewählt werden. Ebenso ist es jedoch möglich, auf eine ganz andere Technik wie beispielsweise die LIGA-Technik zurückzugreifen.

Eine weitere vorgesehene Anwendung besteht darin, die Spiegelschicht dazu zu benutzen, den Lichtstrahl in etwa in sich selbst zurück zu reflektieren. In dieser Konfiguration dient das Verfahren zur Herstellung von Spiegeln an optischen Resonatoren.

## Patentansprüche

1. Verfahren zur Erzeugung eines optischen Wellenleiters mit einer Reflexionseinrichtung, dadurch gekennzeichnet, daß in einem Substrat (1) eine längliche Vertiefung (10) erzeugt wird, daß in einem folgenden Schritt eine Metallschicht (5) aus einem Metall mit hohem Schmelzpunkt auf wenigstens eine Fläche der Vertiefung aufgebracht wird, und daß in einem auf diese beiden Schritte folgenden Schritt ein geeignetes Wellenleitermaterial (20) in die Vertiefung (10) eingebracht wird.

2. Verfahren zur Erzeugung eines optischen Wellenleiters nach Anspruch 1, dadurch gekennzeichnet, daß in mindestens einem weiteren Ätzschritt nach dem Aufbringen der Metallschicht (5) die Vertiefung (10 oder 7) erweitert wird, wobei die Metallschichten (5) mindestens teilweise erhalten bleiben und daß in einem anschließenden Schritt das Wellenleitermaterial (20) in die Vertiefungen eingebracht wird.

3. Verfahren nach einem der Ansprüche 1 oder 2, dadurch gekennzeichnet, daß die erzeugte Struktur nach dem Einbringen des Wellenleitermaterials (20) in die Vertiefung (10 oder 7) einer Wärmebehandlung unterzogen wird.

4. Verfahren nach einem der vorhergehenden Ansprüche 1 bis 3, dadurch gekennzeichnet, daß das Wellenleitermaterial (20) aus Siliziumoxinitrid gebildet wird.

5. Verfahren nach einem der vorhergehenden Ansprüche 1 bis 4, dadurch gekennzeichnet, daß das Substrat aus Silizium besteht, wobei die Oberfläche vorzugsweise eine [100]-Orientierung besitzt, und daß eine dachförmige Vertiefung durch einen naßchemischen anisotropen Ätzprozeß erzeugt wird.

6. Vorrichtung zur Reflexion von Licht in einem Wellenleiter, dadurch gekennzeichnet, daß ein Substrat (1) mit einer länglichen, Vertiefung (10 oder 7) versehen ist, welche mindestens eine Seitenfläche aufweist, die mit einer Metallschicht (5) aus einem Metall mit hohem Schmelzpunkt versehen ist, daß diese Vertiefung mindestens teilweise mit einem Wellenleitermaterial (20) ausgefüllt ist, daß dieses Wellenleitermaterial (20) mindestens teilweise die Metallschicht (5) bedeckt.

7. Vorrichtung nach Anspruch 6, dadurch gekennzeichnet, daß das Wellenleitermaterial (20) zur Verringerung der optischen Verluste bei hohen Temperaturen getempert ist.

8. Vorrichtung nach einem der Ansprüche 6 oder 7, dadurch gekennzeichnet, daß das Wellenleitermaterial (20) Siliziumoxinitrid ist.

9. Vorrichtung nach einem der Ansprüche 6 bis 8, dadurch gekennzeichnet, daß das Substrat (1) aus Silizium ist, daß die Vertiefung dachförmig ist und daß die Vertiefung durch anisotropes Ätzen erzeugt ist.
